# EUROPEAN PATENT APPLICATION

(11) **EP 2 848 851 A1**
(43) Date of publication of application: **18.03.2015**
(21) Application number: 14425113.9
(22) Date of filing: 12.09.2014
(51) Int. Cl.: F16L 23/024, F16L 23/032, F16L 23/16

(54) **Flange and flanged system for joining pipes**

(30) Priority: 16.09.2013 IT RM20130513
(71) Applicant: Deriplast S.p.A., 45010 Villadose (RO) (IT)
(72) Inventor: Cirino Pomicino, Luigi, 80121 Napoli (IT)
(74) Representative: Bellomia, Paolo

(57) **Abstract**

Described is a flange (30) for joining portions of pipe (100; 101) , comprising a hollow section designed to enter in a first portion of a pipe, designed to couple with a further and second flange (20) joined to a second portion of the pipe and allowing a flow of a fluid; the flange (30) comprises a face (31) for coupling with a face (21) of a second flange (20) ; the face (31) comprising a first and a second annular recess, the first and second annular recesses (34; 35) being concentric and separated from each other by at least one wall (37) with a discontinuous profile which makes a hydraulic seal, extending towards the outside of the recesses along a direction substantially parallel to the axis (X) of the flange and designed to make contact, in use, with a portion of the face of the second flange. The wall (3) has knurled profile with a plurality of tips designed to enter into contact in use with the face of the second flange. Inside the second annular recess (35) there is a third annular recess (36) having a depth greater than that of the second annular recess (35).

## Description

This invention relates to a device for joining together two sections of the pipe and in detail relates to a flanged system for joining pipes.

This invention also relates to in particular a flange designed to make a joint between two pipes or sections of the pipe both with and without deformable sealing elements.

It is known that large diameter pipes made of plastic are used in the public building works sector. The pipes are typically designed to contain fluids not under pressure.

Considering the considerable length of the public building works sections it is necessary to join these pipes with techniques which are able to guarantee a perfect hydraulic seal at the joints between the pipes.

Prior art techniques for joining pipes comprise, for example, the so-called end-end welding, heat-sealable sleeves and jointing systems which make use of flanges with seal rings or O-rings.

Despite the improvement in quality of the above-mentioned sealing systems over the years, the known types of jointing systems have some drawbacks. In this instance, with the exception of end-end jointing systems and all the systems for connecting by welding, the connection between the pipes or the sections of pipe only operates correctly if use is made of a seal ring.

Although the end-end joints and the heat-sealable sleeves operate well, the large sizes of the pipes, especially in terms of diameter, often results in various problems during the operations for installing the product; large sized machinery, which is expensive and bulky, is therefore necessary, which does not facilitate the operations for laying the pipe.

There are then the so-called "cup-shaped" joints, which are made using materials such as rubber, which although inexpensive only operate well and guarantee an optimum seal of the joint in the short term. In effect, the quality of the rubber and its mechanical and chemical cohesion characteristics tend to degrade over time, thus progressively resulting in the loss to the joint of its primary function of hydraulic seal.

The aim of this invention is to describe a flanged system for joining together pipes which contributes to reducing the above-mentioned drawbacks, and more in detail allows a hydraulic seal to be made which is longer lasting and more effective, also by using rubber seals.

Another aim of this invention is to describe a flange designed to be installed on pipes which contributes to reducing the above-mentioned drawbacks and is designed to make a part of a joint with a hydraulic seal also with the possible deformable sealing ring which is worn and/or damaged.

The invention accordingly provides a first flange for joining portions of pipe, comprising a hollow section designed to enter in a first portion of a pipe, designed to couple with a further and second flange joined to a second portion of the pipe and allowing a flow of a fluid; the flange comprises a face for coupling with a corresponding face of a second flange; the face comprising a first and a second annular recess, the first and second annular recesses being concentric and separated from each other by at least one wall with a discontinuous profile which makes a hydraulic seal, extending towards the outside of the recesses along a direction substantially parallel to the axis of the flange and designed to make contact, in use, with a portion of the face of the second flange, wherein the wall with a discontinuous profile has a knurled profile having a plurality of tips designed to enter into contact in use with a portion of the face of the second flange, and wherein inside the second annular recess there is a third annular recess having a depth greater than that of the second annular recess.

Advantageously, the face of the first flange has a peripheral portion lying on the same plane as the higher portions of the wall with a discontinuous profile. Advantageously, the first flange also comprises a plurality of peripheral holes designed for introducing fixing means designed to keep, in the use, the face pressed against the face of the second flange.

Also provided according to this invention is a method for making a flanged system, comprising a first and a second flange which can be coupled to each other and the first of which is made according to the invention of this type; the face of the first flange being substantially flat and designed to couple with the corresponding face of the second flange at least at the wall with a discontinuous profile for making an element with a hydraulic seal made integral on the first flange.

Advantageously, the second flange has a face comprising at least one pair of concentric recesses separated from the wall with a discontinuous profile. Advantageously, the first flange also comprises a deformable sealing element which can be inserted between the two flanges and designed to be compressed between the two flanges to increase the hydraulic seal of the system. Advantageously, the second flange comprises a third recess having a depth greater than the depth of the first recess and second recess and having a diameter substantially equal to the diameter of the deformable sealing element; the depth of the second recess is such as to allow the deformation of the deformable sealing element in an operating configuration wherein the two faces of the first and second flange are coupled together.

Advantageously, the above-mentioned flanged system also comprises means for joining between the first and second flange, the joining means being introduced at least partly inside a plurality of perimeter holes positioned on an outer portion of the face; each hole being parallel to the contiguous holes and defining an axis parallel to the axis of the first and/or second flange.

Further features and advantages of the invention are described in more detail below of the preferred non-exclusive embodiments and with reference to the accompanying drawings in which:
- Figure 1 shows a schematic cross section of a flanged system for joining two pipes;
- Figure 2 shows a schematic top plan view of a flange forming part of the flanged system for joining two pipes;
- Figure 3 shows a detailed view of a portion of the system of Figure 1; and
- Figure 4 shows a detail of a preferred embodiment of the flanged system for joining two pipes according to this invention.

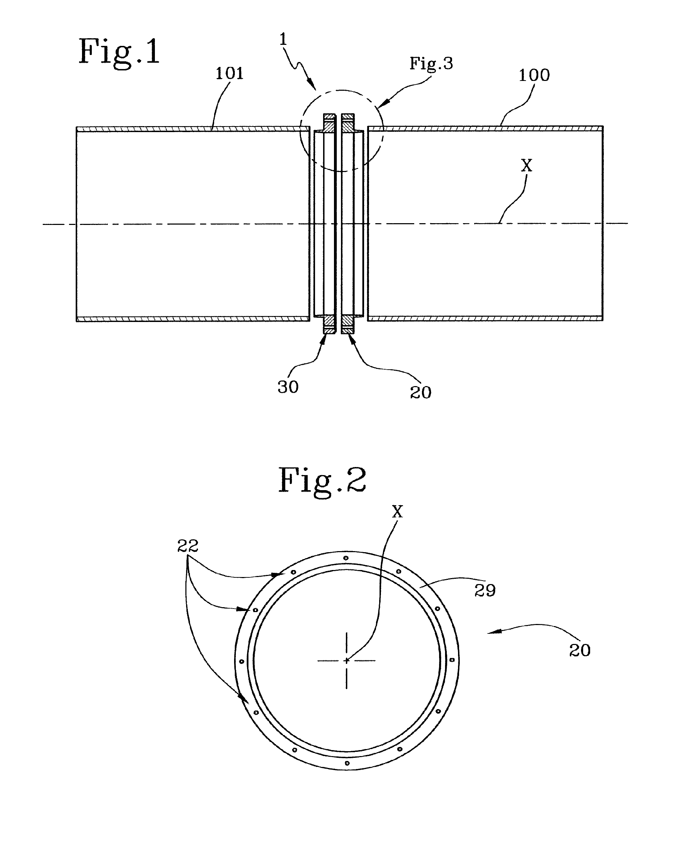

With reference to the above-mentioned figures, and in detail with reference to Figure 1, the numeral 1 denotes in its entirety a preferred embodiment of a flanged system for joining pipes.

The system 1 comprises a first flange 30 and a second flange 20, each of which has a cross-section which is, but not necessarily, cylindrical in shape designed to be inserted into the respective section of pipe 100, 101. More specifically, the cross-section designed to be inserted inside the pipe has an outside diameter which is slightly greater than the diameter of the pipe itself, so that it can create an opposing force between the pipe and the cross-section during insertion. The system is designed to act as a joining element for pipes in which the fluid flowing is not subjected to additional pressure, that is, for pipelines not under pressure. Each of the flanges 20, 30 has a face 21, 31 preferably circular in shape having a diameter considerably greater than the diameter of the cross-section designed to be inserted inside the pipe. In effect, on the face 21, 31 there is a plurality of parallel holes 22, 32, arranged radially around the circumference of the flange at a uniform distance from one another and each having a respective axis parallel to the axis defined by the central hole of the flange, which ideally is in turn parallel and coinciding with the axis X of the pipe.

As shown in Figures 2, the second flange 20 has a completely smooth face, that is, its cross-section lies on a single plane and is interrupted by the central hole or cavity where, in use, the fluid coming from the pipe flows.

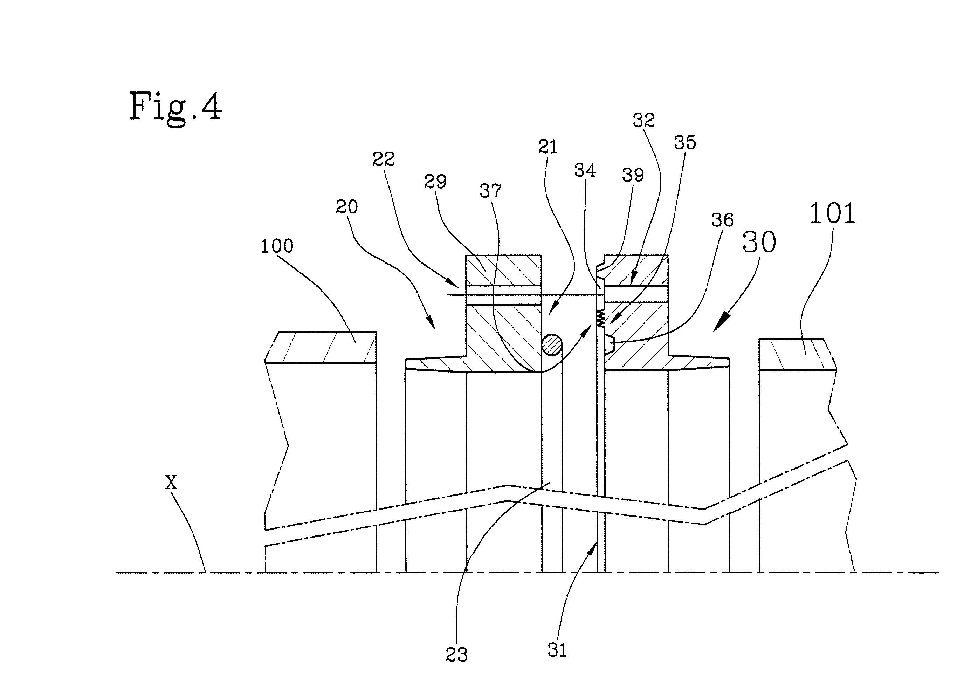

According to the inventive concept of this invention, and as illustrated schematically in Figure 4, the first flange 30 has a respective face 31 having, on the contrary, a plurality of recesses; thus, the cross-section of the face 31 no longer lies on a single plane, but on several planes. More in detail, starting from the outermost zone and gradually moving inwards and towards the axis X, immediately inside a peripheral portion 39 where there are the holes arranged radially around the circumference, it is possible to see firstly a first annular recess 34 having walls slightly inclined relative to the right angle of the axis X and having a first depth relative to the outermost surface of the face 31 of the first flange 30. Moving progressively towards the axis X it is possible to see a second annular recess 35 on the face 31, concentric with the preceding annular recess 34 and comprising a substantially flat lower wall that terminates towards the central portion of the first flange 30 at the cavity where the fluid slides in use.

Moving towards the axis X along the face 31 it is possible to see a third annular recess 36 having a greater depth than that of the second annular recess 35 and the first annular recess 34. Preferably, the first annular recess 34 and the second annular recess 35 have a same depth. The second annular recess 35 terminates towards the inner zone of the flange 30 at its cavity, which is again circular in shape. An example of this solution is illustrated schematically in Figure 4.

This embodiment defines a flanged coupling system which has high performance characteristics in terms of hydraulic seal with the presence of three annular recesses 34, 35 and 36.

Advantageously, the third annular recess 36 allows the housing of a sealing element 23 in the coupling of the above-mentioned system, between the first flange 30 and the second flange 20 in an operating use configuration.

Preferably, the sealing element 23 is made in the form of an annular seal or O-ring, that is, made of a material such as to be compressible and hence deformable by compression. The diameter of the circumference defined by the sealing element 23 is less than the diameter defined ideally by the plurality of holes 22, 32. Figure 4 shows how the sealing element 23 extends outside the surface of the face 21 of the second flange 20; this allows the sealing element 23 to be at least partly compressed when the second flange 20 is coupled to the first flange 30. More specifically, the third annular recess 36 is allocated in such a way as to define a diameter substantially equal to the diameter of the sealing element 23, and when the first flange 30 and the second flange 20 are coupled together the sealing element 23 is substantially housed in the third annular recess 36. Preferably, between the first annular recess 34 and the second annular recess 35 there is a wall 37 with a discontinuous profile, hereafter referred to as the knurled wall 37, which also forms an annular cross-section when first flange 30 is seen from above. The knurled wall 37 has a plurality of tips, shown schematically in the figures and without limiting the invention to be four in number, alternated by recesses which are substantially triangular in shape. The maximum height defined by the tips of the knurled wall 37 is such as to carry the tips on the same plane where a peripheral portion 39 of the face 31 of the first flange 30 lies. Preferably, the plurality of tips present on the knurled wall 37 are designed to deform by a compression between the first flange 30, comprising the knurled wall 37, and the second flange 20 in an operating use configuration of the coupling between the flanges 20, 30.

In a configuration wherein the first flange 30 and the second flange 20 are coupled together, they are pressed one against the other by means of bolts introduced in the holes 22, 32; the bolts, compressing the two flanges, guarantee the contact of the two faces of the flanges in their outermost peripheral portion and at the knurled wall 37, compressing in addition the seal ring 23 in the third recess 36 and/or causing at least the partial deformation of the tips of the knurled wall 37. Advantageously, the deformation of the seal ring 23 in the third annular recess 36 guarantees a good hydraulic seal of the joint between the two pipes 100, 101 or sections of pipe both by the mechanical coupling between the knurled wall 37 and the face 21 of the opposite flange 20, and by a mechanical joint of a deformable type.

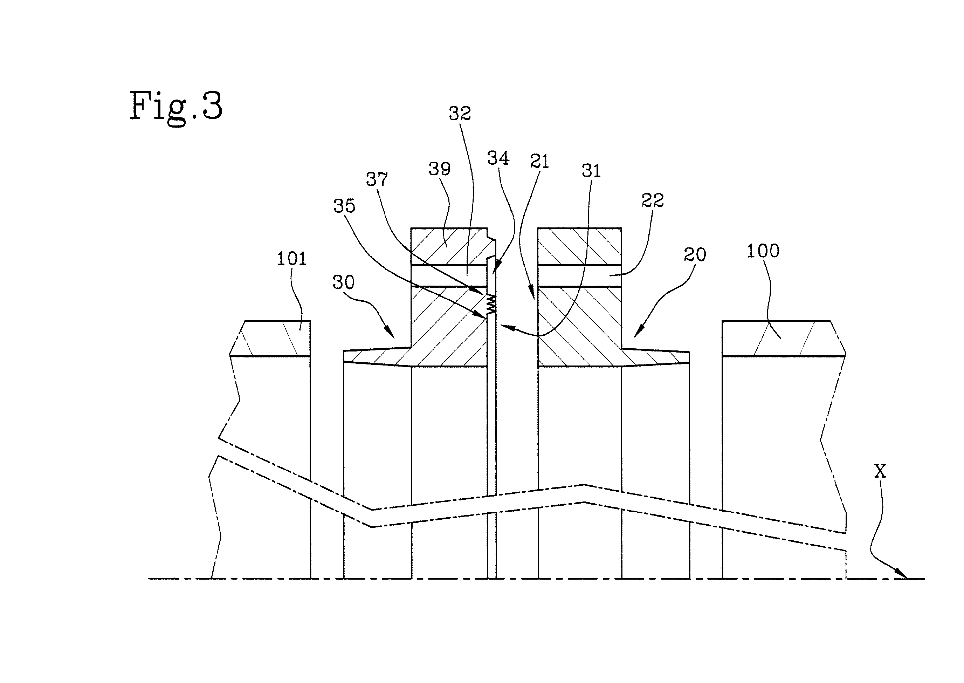

A second embodiment of the system according to this invention is shown schematically in Figure 3.

Also in this embodiment of the system each of the flanges 20, 30 has a face 21, 31 preferably circular in shape having a diameter greater than the diameter of the cross-section designed to be inserted inside the pipe. On the face 21, 31 there is a plurality of holes 22, 32, arranged radially around the circumference of the flange and each having a respective axis parallel to the axis defined by the central hole of the flange, which ideally is in turn parallel and coinciding with the axis X of the pipe.

The first flange 30 comprises a face 31 which has a plurality of recesses. Starting from the outermost zone and gradually moving inwards towards the axis X, a first annular recess 34 will be seen firstly, having walls slightly inclined relative to the right angle of the axis X and having a first depth relative to the outermost surface of the face 21 of the second flange 20.

Moving progressively towards the axis X it is possible to see a second annular recess 35 on the face 31, concentric with the preceding annular recess 34 and comprising a substantially flat lower wall that terminates towards the central portion of the flange 30 at the cavity where the fluid slides in use.

Preferably, the first annular recess 34 and the second annular recess 35 have a same depth. The second annular recess 35 terminates towards the inner zone of the flange 30 at its cavity. In detail, between the first and the second annular recess 34, 35 there is a knurled wall 37, which also forms an annular cross-section when first flange 30 is seen from above.

Preferably, the knurled wall 37 has a plurality of tips, shown schematically in the figure and without limiting the invention to be four in number, alternated by recesses which are triangular in shape. The maximum height defined by the tips of the knurled wall 37 is such as to carry the tips on the same plane where the peripheral portion 39 of the face 31 of the first flange 30 lies, where there are the perimeter holes.

Once the first flange 30 and the second flange 20 are coupled together, they are kept in contact by a clamping force exerted by a plurality of bolts which are inserted in the holes 22, 32. In that way, the first and second flange 30, 20, at the peripheral portion 39 and the knurled 37 are in contact with each other; this contact is sufficient to guarantee an effective hydraulic seal.

The bolts represent a preferred and non-limiting embodiment of means for fixing between the first flange 30 and the second flange 20 which are designed to maintain a force for pushing the faces against each other for an extended period of time.

The knurled wall 37, in both the first and second embodiments of this invention, advantageously defines, in a most general form, a wall with a discontinuous profile which makes a hydraulic seal when coupling with the opposite flange, the wall being made with the same material as the flange and therefore being integral with the body of the flange.

The advantages of this invention are clear in light of the above description. More specifically, the system described makes it possible to make a joint of two pipes or sections of pipe in an easy and long-lasting fashion, without the need for welding between two flanges and guaranteeing the hydraulic seal regardless of whether or not it has a seal ring. Advantageously, the flanged system according to this invention provides an increased hydraulic seal between the two flanges by use of the sealing O-ring, giving at the same considerable elasticity and capacity to compensate for any deformations, for example, thermal or mechanical, of the overall pipe.

Advantageously, in the case of inevitable degradation of the sealing element of the flanged system (due to corrosion, mechanical or thermal wear or tear) the hydraulic seal of the flanged system is not adversely affected since the rigid mechanical contrast between the knurled wall and the opposite face of the flange, and the peripheral portions of the flanges, is never missing. For this reason, the flanged system described may be conveniently used for all those applications in which the fluid may chemically corrode the seal in relatively short times, without deterioration of the final quality of the hydraulic sealing. The flanged system according to this invention may be implemented on various dimensions, making it possible to effectively adapt it for the joining of large diameter pipes without deterioration of the sealing characteristics.

The flanged system according to this invention may be made of recyclable materials, both in a single mould and by using different and successive processing methods.

It will be understood that the flanged system according to this invention can be modified or adapted in several ways, obvious to an expert in the trade, without thereby departing from the scope of protection offered by the accompanying claims.

## Claims

1. A flange (30) for joining portions of pipe (100; 101), comprising a hollow section designed to enter in a first portion of a pipe, designed to couple with a further and second flange (20) joined to a second portion of the pipe and allowing a flow of a fluid; the flange (30) comprising a face (31) for coupling with a corresponding face (21) of the second flange; the face (31) of the flange (30) comprising a first and a second annular recess (34, 35), the first and second annular recesses (34, 35) being concentric and separated from each other by at least one wall (37) with a discontinuous profile which makes a hydraulic seal, extending towards the outside of the recesses (34, 35) along a direction substantially parallel to the axis (X) of the flange (30) and designed to make contact, in use, with a portion of the face (21) of the second flange (20), wherein the wall (37) with a discontinuous profile has a knurled profile having a plurality of tips designed to enter into contact in use with the portion of the face of the second flange;
**characterised in that** inside the second annular recess (35) there is a third annular recess (36) having a depth greater than that of the second annular recess (35).

2. The flange according to claim 1, wherein the face (31) has a peripheral portion (39) lying in the same plane as the higher portions of the wall with a discontinuous profile.

3. The flange according to any one of the preceding claims, also comprising a plurality of peripheral holes designed for introducing fixing means designed to keep, in the use, the face (31) pressed against the face (21) of the second flange (20).

4. A flanged system **characterised in that** it comprises a first flange (30) according to any one of the preceding claims and a second flange (20) designed to be coupled to the first flange (30), wherein the face (31) of the first flange (30) is substantially flat and designed to couple with the corresponding face (21) of the second flange (20) at least at the wall (37) with a discontinuous profile for forming an element with a hydraulic seal made integral on the first flange (30).

5. The flanged system according to claim 4, wherein the first flange (30) has a face (31) comprising at least one pair of concentric recesses (34, 35) separated from the wall (37) with a discontinuous profile.

6. The flanged system according to claim 4 or 5, also comprising a deformable sealing element (23) which can be inserted between the two flanges (20, 30) and designed to be compressed between the two flanges (20, 30) to increase the hydraulic seal of the system.

7. The flanged system according to claim 6, wherein the third recess (36) has a depth greater than the depth of the first recess and second recess (34, 35) and has a diameter substantially equal to the diameter of the deformable sealing element (23); the depth of the second recess (35) being such as to allow the deformation of the deformable sealing element in an operating configuration wherein the two faces (21, 31) of the first and second flange (30, 20) are coupled together.

8. The flanged system according to any one claims 4 to 7, also comprising means for joining between the first and second flange (30, 20), the joining means being introduced at least partly inside a plurality of perimeter holes (22, 32) positioned on an outer portion of the faces (21, 31); each hole (22, 32) being parallel to the contiguous holes (22, 32) and defining an axis parallel to the axis (X) of the first (30) and/or second flange (20).
